# EUROPEAN PATENT APPLICATION

(11) **EP 2 624 600 A1**
(43) Date of publication of application: **07.08.2013**
(21) Application number: 12156974.3
(22) Date of filing: 24.02.2012
(51) Int. Cl.: H04W 4/00

(54) **Radio device and application server adapted for automated M2M access evaluation and Method of operating a radio device**

(30) Priority: 03.02.2012 EP 12153940
(71) Applicant: Cinterion Wireless Modules GmbH, 81669 München (DE)
(72) Inventor: Breuer, Volker, 16727 Bötzow (DE); Antonov, Iavor, 13353 Berlin (DE)
(74) Representative: Eisenführ, Speiser & Partner

(57) **Abstract**

The invention relates to a radio device, comprising:
- a communication unit, which is configured to communicate with an allocated access-cell node of an access cell of a cellular radio access network;
- a transmission scheduling unit, which is configured
- to initiate transmissions of application data between the radio device and the access-cell node in accordance with a predetermined application transmission schedule defining at least one allowed transmission time span, in terms of a week, a day or a time of day for the transmission of the application data,
- to select a point in time for initiating the transmission of the application data within the respective current allowed transmission time span in dependence on a traffic condition to be fulfilled.

## Description

The instant invention relates to a radio device, in particular configured for an automated M2M access evaluation, comprising a communication unit, which is configured to communicate with an allocated access-cell node of an access cell of a cellular radio access network; and comprising a transmission scheduling unit. The invention also relates to an application server comprising a server application scheduling unit. The invention also relates to a Method for operating a radio device, in particular a radio device of an application device and/or an application server.

The invention is specifically advantageous in the field of machine-to-machine (M2M) communication. M2M communication is performed via communication networks of limited capacity, such as radio access networks. A first machine performs a specific application function and transmits application exchange data related to this application function to a second machine. This second machine processes the received application exchange data in order to perform other functions, which may for instance be control or monitoring of the first machine. Without loss of generalization, the present specification will refer to the specific application function of the first machine, and thus to the first machine itself; which hereinafter may also be denoted simply as an application device or application. The data for exchange, i.e. upload and/or download transmission, by the application will be referred to as application data or application exchange data. The second machine will hereinafter also be referred to as an application server, without implying performance of other functions than receiving and processing the application exchange data.

An example of an application is an electrical meter that measures a consumption of energy in a consumer household. For enabling M2M communication, such an electrical meter may comprise a radio module for the transmission of the measured energy consumption data to an application server of a central system of an energy provider. In the art, this type of advanced metering infrastructure is often referred to as a "smart meter". Smart meters may not only provide one type of application exchange data such as the mentioned example of energy consumption. Other types of application exchange data of a smart meter may comprise information on a status of the meter device, e.g. on a power outage, or other state information regarding the monitored physical quantity. Currently, the number of installed smart meters is low enough to be accommodated by the capacity of existing radio access network infrastructure. However, with an expected increase in the number of M2M applications that use communication via radio access networks, the transmission capacity provided by the radio access networks may become increasingly used by M2M devices, thus increasing the chances of insufficient capacity or decrease in quality of service delivered for transmissions other than M2M, such as speech and Internet traffic. For instance, mobile telephone users may not be able to access a radio access network in moments of peak usage by M2M applications. In summary, congestion is expected to become a major problem as the number of smart metering devices using data communication via radio access networks increases.

It is therefore an object of the present invention to provide a radio device that helps avoiding congestion in a radio access network. It is another object of the present invention to provide a transmission scheduling unit in the radio device, which is further improved to help avoiding congestion in a radio access network. In particular, the radio device, preferably the radio device of an application device, is configured to relax a traffic congestion situation in radio access networks. In particular, relaxation shall be based on a particular easy but nevertheless effective concept which can be handled on an application side alone, without or at least with less requesting for radio access network support. Further objects of the present invention relate to a method for operating a radio device and an application server of a mentioned type that helps avoiding traffic congestion in a radio access network.

The object with regard to the device is achieved by the invention by means of a radio device as claimed in claim 1. In accordance with the invention it is proposed that the transmission scheduling unit is configured:
- to initiate transmissions of application data between the radio device and the access cell node in accordance with a predetermined application transmission schedule defining at least a one allowed transmission time span, in terms of a week, a day or a time of day for the transmission of the application data, and
- to select a point in time for initiating the transmission of the application data within the respective current allowed transmission time span in dependence on a traffic condition to be fulfilled.

The invention also leads to an application server as claimed in instant claim 19. As regards the method the object is achieved by the invention by means of a method for operating a radio device as claimed in claim 20. The radio device is in particular a radio device of an application device and/or an application server. For operating a radio device the method comprises the steps of:
- providing a traffic condition to be fulfilled
- providing a predetermined application transmission schedule defining at least one allowed transmission time span, in terms of time for the transmission of the application data,
- selecting a point in time for initiating the transmission of the application data within the respective current allowed transmission time span in dependence on the traffic condition to be fulfilled,
- initiate transmissions of application data between the radio device and the access-cell node in accordance with the application transmission schedule.

The present invention is based on a first item of recognition that M2M communication, in many application scenarios, is less time critical and thus in principle may be distributed in time. The application scheduling unit of the radio device is configured to control the initiation of a transmission of application exchange data on the basis of an application transmission schedule determining one or more allowed transmission times. An allowed transmission time, in accordance with the present invention is a time span or a point in time. As a time span, the allowed time is defined in terms of a week, a day or a time of day. The term time of day is to be understood as defining either at least one time span within a day or at least one point in time during a day. Only during the allowed time a transmission of the application exchange data is allowed by the application scheduling unit.

The transmission of application exchange data may comprise in particular an upload of data--thus output data of a radio device--It is noted that the transmission of application exchange data may comprise a download of data--thus input data of a radio device--, available for instance for download to the radio device from an application server, such as regular firmware update, content updates like maps, for instance for an assisted global position system (AGPS) etc. It is one of the advantages of the present invention to avoid congestion due to all radio devices accessing the application server at the same time to download such data.

The radio device of the present invention is distinguished from known radio devices by the application scheduling unit and the layout of the scheduling unit. The application scheduling unit operates on basis of a predetermined application transmission schedule, which is managed locally within the radio device. The application transmission schedule applies to application exchange data that, in operation of the radio device, are provided by an application unit. However, for clarification it is noted that the radio device in some embodiments can be provided without an application unit, but with the application scheduling unit. For instance, an application unit may be formed by a meter to be connected with the radio device. The radio device may in this case be delivered to a manufacturer of the meter, which combines the meter and the radio device to form an application device.

In a second item of recognition the invention considers that, as the population of M2M devices is continuously increasing, the insisting networks need to handle in future the existing population of mobiles and on the top the increasing population of end-to-end devices. However, also the invention recognized that the majority of the M2M devices is believed to generate little traffic only, which might nevertheless be bursty by nature i. e. every hour, half hour and fifty minutes increased activation can be expected. The reason for this is that usually an automated exchange of information in an M2M application is engineered on a periodic basis wherein for periodicity a week, a day or a time of day is used as starting points. M2M devices having a radio device implemented will be controlled by the connected application and hence very likely a situation occurs that during the same time a same access or context establishment are tried, especially at certain times staggered with a certain periodicity. Thus, activation of numerous radio devices in parallel will lead to a high signalling load in the network and cause even during setup the network to be blocked; thus leading to unsuccessful call attempts. While solutions based on a network control operator or service control demand for centralized and possibly insufficient measures the instant invention recognized that a radio device for implementation in an application device is suited to relax a congestion situation. A congestion relaxation according to the concept of the invention is achieved by selecting a point in time for initiating the transmission of the application data within the respective current allowed transmission time span and in dependence on a traffic condition to be fulfilled. Thus, the concept relies on access control of a radio device based on the knowledge of a traffic condition in the cellular network.

A knowledge based concept providing knowledge about a traffic condition as a function of time is suited as a basis to control interaction of a radio device with a radio network, namely a network node or the like network station for wireless contacting an application server. This basic concept may be further adapted as a first aspect of the instant invention.

The basic concept may be also further developed within a second aspect of the invention; namely providing statistical or randomized functionalities for further distribution of network access. Thus this further supports relaxation of a traffic dependent transmission in an allowed time span.

According to a third further developed aspect of the instant invention, the conditions for providing a traffic condition and/or randomization can be further adjusted according to certain conditions in a control mechanism. Proper conditions set such that data transmission scheduling is closely adapted to the actual load situation of a cell.

In summary, the instant concept of the invention has recognized that there is a need to prevent a mobile radio device from immediate or scheduled executing an access attempt to achieve a congestion relaxation. Because for mobiles considered so far the access driving instance is the person behind which cannot be controlled, thus, a natural relaxation for automatic applications has not been considered yet nor is available. Also concentrated data bursting has not been the case in persona applications apart from situations known from mammoth events or the like - therein a bunch of persons is concentrated in a certain location and thus leads to an overload access of radio devices in a network cell. Access attempt in time is rather not controllable for sure. But there are methods to prevent the network from damage in extreme situations for instance DSAC (domains specific access control and automatic calling repeat attempt restrictions) for such exceptional situations. However, these mechanisms for extreme situations and catastrophic scenarios are not considered to be suitable for normal operation. Consequently, in view of an increasing population of M2M devices, the instant aspects of the invention and preferred developments do not prevent from accessing the network but schedule allowed times and relax a congestion situation by means of distribution of access in dependence on a traffic condition. This leads to smoothing of access load versus time for non-critical operations according to the first aspect, and according to a second aspect a simulated randomization avoids bunching. According to a third aspect adapting conditions is possible wherever necessary and developing the conditions according to the demands of a cell and its traffic.

The concept of the invention recognized that for executing these tasks a logical entity in a radio device can be used which bears the capability to apply such behaviour even autonomously from the network. Besides the radio devices autonomous activities being described hereinafter in detail, signalling based methods shall not be precluded; related basic ideas are also claimed where deemed appropriate.

These aspects of the invention and further developments thereof are further outlined in the dependent claims. Thereby the mentioned advantages of the proposed concept are even more improved.

Nevertheless the concept does not exclude, that a server application-scheduling unit is configured to receive a request from a radio device for provision of an updated application transmission schedule; e.g. the request containing transmission failure data. Then also a server application-scheduling unit can be configured to re-determine the application transmission schedule for the requesting allocated radio device using the previous application transmission schedule and the received transmission failure data and to initiate a response to the request via a transmission of the re-determined application transmission schedule to the respective radio device. E.g. the application unit can be configured to ascertain a number of failed attempts of initiating a scheduled transmission and to initiate a transmission of the number of failed attempts to the application server, in particular to request the updated application transmission schedule after the predetermined time span has elapsed.

Consequently --most advantageously by autonomous scheduling of the radio device-- a risk of correlation peaks and congestion of access attempts are spread, in particular equally spread over an allowed transmission time span, in particular in the closest time range around an allowed transmission time point and in particular are developed adapted for future or dynamic demands of a traffic load in the network.

The method and developed configurations thereof as outlined above may be implemented by digital circuits of any preferred kind, whereby the advantages associated with the digital circuits may be obtained. In particular, one or more method steps and/or features of the method can be implemented by one or more means for functionally executing the method step. A single processor or other unit may fulfil the functions of several means recited in the claims - this in particular holds for user equipment according to the concept of the invention. In particular the application scheduling unit may be provided as a hardware unit with dedicated circuitry. In another embodiment, it is implemented by means of a programmable microprocessor and a corresponding executable software unit. The application scheduling unit may be for instance provided as a functional unit of an operating system that is installed on the radio device for control of its operation. In another embodiment, the application scheduling unit is a software unit that is separate from the operating system and installable on top of the operating system as a part of an application layer functionality of the radio device.

Preferably the transmission scheduling unit is configured to initiate transmissions of application data between the radio device and the access-cell node after a maximum time span in which the configured transmission criteria were not fulfilled. Thereby a data-loss or a no-transmission situation is avoided; after a maximum time span transmission of data is enforced. In particular the application unit is configured to ascertain a number of failed attempts of initiating a scheduled transmission and the transmission scheduling unit comprises a timer for measuring a predetermined time span after a trigger event, and wherein the transmission scheduling unit is configured to trigger the timer in the event of detecting a first failed attempt of a scheduled transmission of the application data. It is to be noted that a failed attempt does not necessary mean that a transmission literally failed but it was not initiated due to the given transmission traffic criteria.

Preferably the radio device comprises a measurement unit, which is connected with the transmission scheduling unit and which is configured to ascertain a current value of a quantity indicative of a current transmission traffic amount on a download channel, which is served by the access-cell node that is to receive the transmission of the application data. The development recognized that the current value is a measure of the traffic condition in either upload or download direction. Thus advantageously a threshold value of the quantity indicative of a current transmission traffic amount is forming the decision border whether transmission is initiated. Preferably a stored threshold value depends on the amount and/or priority of the data to be transmitted from the radio device. The application unit is preferably configured to provide updated scheduling information.

The transmission scheduling unit preferably has read access and write access to a device memory that stores a threshold value and/or traffic condition data related to at least one prior allowed transmission time span. Thus update and in situ adaptation of the parameters stored can be accomplished. The device memory generally can be provided in various kinds; in particular is available as a device memory of the radio module and/or a subscriber identification module and/or of the application module.

In a particular preferred development a transmission scheduling unit is configured to ascertain, from the stored traffic condition data, a first traffic time span within a respective scheduled allowed transmission time span, the first traffic time span exhibiting a value of the measure of the upload traffic condition exceeding a predetermined threshold value, and to select the point in time for initiating the transmission of the application data from at least one second time span within the respective scheduled allowed transmission time span, the second time span having no overlap with the first time span. Thus the first and second time span can be used to separate in particular the times of a 24h-day in (green light) times for initiating the transmission and in (red light) times for not initiating the transmission.

Also a (yellow light) time of a time span can be provided between the first traffic time span and the second traffic time span, wherein data of raised urgency or priority can be sent though a lower threshold is exceeded. In a preferred development a respective priority is preferably allocated to a respective transmission of application data, and wherein the point in time for initiating the transmission of the application data within an allowed transmission time span is determined in additional dependence from the allocated priority in that a smaller maximum delay is preset for a transmission of higher priority and a larger maximum delay is preset for a transmission of lower priority.

Effectively relaxation of a transmission congestion is achieved by a transmission scheduling unit, which is configured to select the point in time for initiating the transmission of the application data from a peak center region of the allowed transmission time span in the case the threshold is currently not exceeded. Further preferably the transmission scheduling unit is configured to select the point in time for initiating the transmission of the application data from a peak off-center region of the time span in the case the threshold is currently exceeded.

Also randomization around a peak center region can be used to further improve relaxation. Preferably the transmission scheduling unit is configured to select an exact point in time for initiating the transmission of the application data at random within the respective allowed transmission time span scheduled for the transmission, if a predetermined threshold value for the respective allowed transmission time span is fulfilled. In a preferred development a jitter range of time is defined around a balance point of time for initiating the transmission of the application data at random. E.g. the transmission scheduling unit is configured to select the exact point in time by either delaying or bringing forward the transmission within the respective allowed transmission time span in accordance with application of a jitter to a predetermined point in time.

Preferably the measurement unit is configured to ascertain, as the quantity indicative of a current transmission traffic amount, a number of failed transmission attempts of the application data between the radio device and the access-cell node in association with the respective allowed time span, in terms of time of the day, in which the failed attempts were made. In particular the transmission scheduling unit can be configured to select an exact point in time for the initiating the transmission of the application data at random within the respective allowed transmission time span scheduled for the transmission, whereas the duration of the transmission timespan depends on the amount of collisions detected during earlier attempts.

Preferably the measurement unit is configured to ascertain, the number of transmission attempts which are triggered after a maximum time has expired irrespective of the traffic condition. In a threshold adaptation unit within the radio device the measured number of timer triggered transmission is compared to a preconfigured value and should the number of timer triggered transmissions exceed the preconfigured values, the threshold adaptation unit notices that the transmission criteria are too tight. In response to such detection threshold adaptation unit adapts transmission criteria that way that the criteria are loosened.

In case the transmission criteria is only valid for a certain priority of data, the transmission criteria are adapted that are assigned to this priority class in the first place. However this has the advantage that it can happen that after said adaptation data of lower priority have tighter transmission criteria assigned than the current priority class. Therefore it is preferred that in that case transmission criteria assigned to at least one further priority class are adapted in response to the adaptation of the transmission criteria assigned to the first priority class.

Preferably --but not necessarily-- the radio device further comprises an application unit, which comprises the transmission scheduling unit, and which transmission scheduling unit is configured to initiate an upload or download data communication between the radio device and an application server via the cellular radio access network. The communication unit is configured to forward scheduling information received from the application server to the transmission scheduling unit, and wherein the transmission scheduling unit is configured to initiate storage of the received scheduling information in a device memory, in particular wherein the device memory is a device memory of the radio module and/or a subscriber identification module and/or of the application module.

For a more complete understanding of the invention, the invention will now be described in detail with reference to the accompanying drawings. The detailed description will illustrate and describe what is considered as preferred embodiment of the invention. It should be of course be understood that whereas modifications and changes in form or detail could readily be made without departing from the spirit of the invention, it is therefore intended that the invention may not be limited to the exact form and detail shown and described herein nor to anything less than the whole of the invention disclosed herein and as claimed hereinafter. Further, the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. In the drawing:

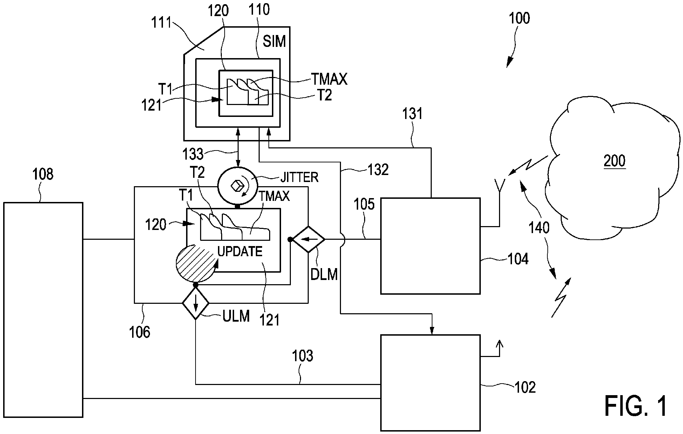

- Fig.1: shows a schematic block diagram of a preferred embodiment of a radio device;

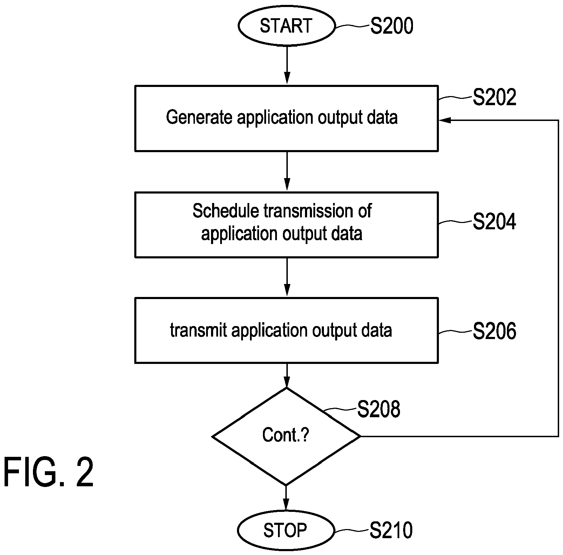

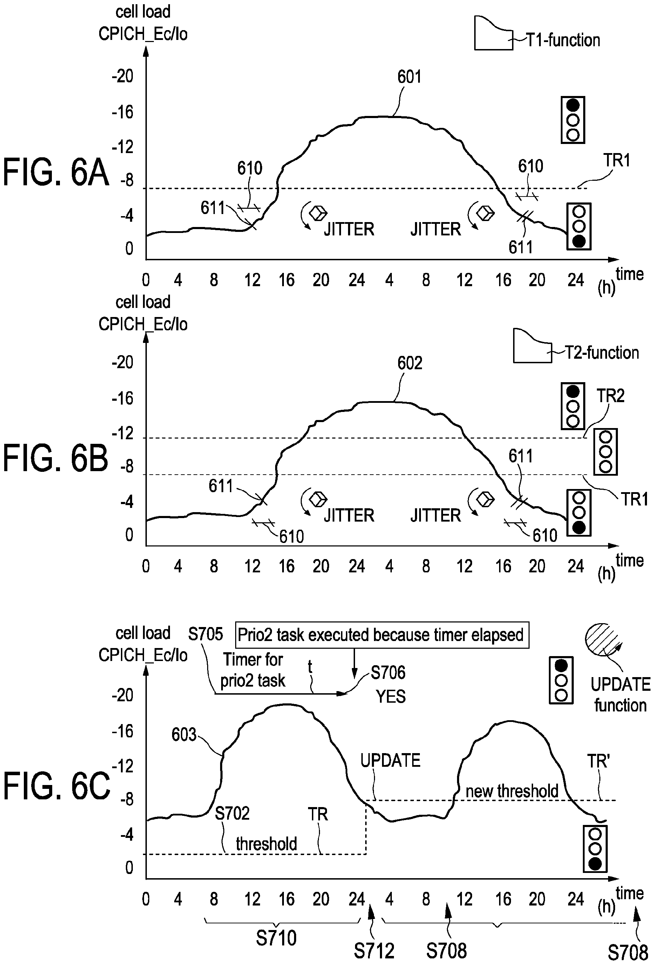

- Fig.2: shows schematically a flow chart of a method for operating the radio device in an application device wherein transmission of the application data within a respective current allowed transmission time span is in dependence of a traffic condition to be fulfilled wherein the traffic condition develops according to a development of threshold values as exemplified in Fig. 6A, Fig. 6B and Fig. 6C;

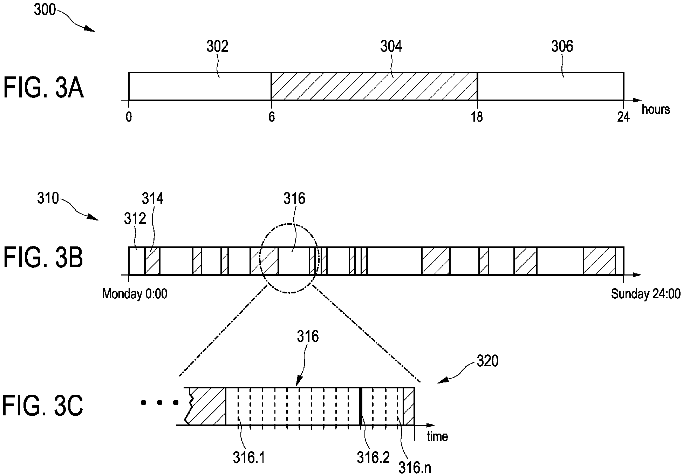

- Fig. 3A, Fig. 3B and Fig. 3C: illustrate embodiments of application transmission schedules as a basis for traffic dependent adaptation of a transmission;

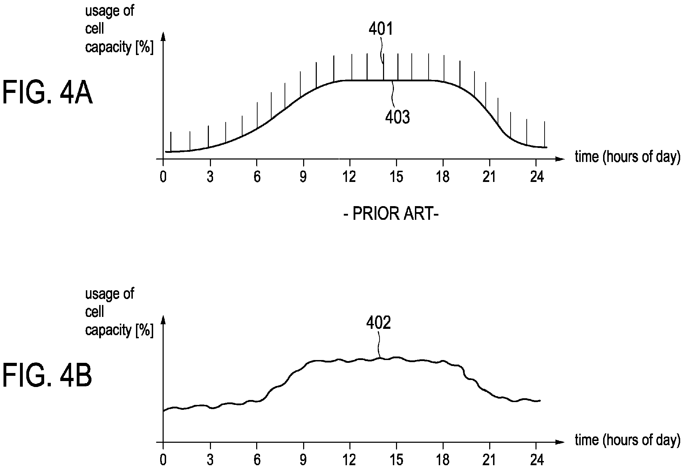

- Fig. 4A and Fig. 4B: visualizes by two schematic drawings a primary effect of a relaxed congestion, wherein transmission capacity of a cell of a radio access network as a function of time over a full day is shown with and without scheduling;

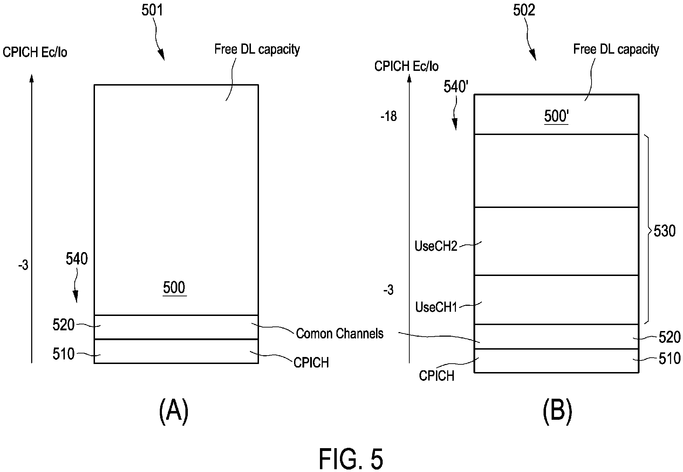

- Fig. 5: schematically shows a UMTS code staple wherein on the left hand side --in view (A)-- an empty cell, this means a cell without data load, is shown and on the right hand side --in view (B)-- a busy cell is shown, thus a cell with data load - a scheme for illustrating a measurable physical quantity is shown, which is significant for evaluating a congestion situation by means of an UMTS code staple of a measured power parameter, namely here a CPICH_E_{c}/lₒ parameter;
- Fig. 6A: illustrates an example of a measured download power of a radio device in an application device of an M2M application in a UMTS cell as a function of daytime and a corresponding power threshold performing a decision border whether transmission is initiated; thus establishing a two phase "traffic light" model for access evaluation and control;
- Fig. 6B: illustrates a more elaborated "traffic light" model for access evaluation and control on basis of the concept illustrated in Fig. 6A wherein a priorization of application data is combined with a lower power threshold and an upper power threshold of variable distance; thus establishing a three phase "traffic light" model for access evaluation and control;
- Fig. 6C: illustrates an exemplifying development of a two phase "traffic light" model for access evaluation and control wherein a threshold value is for adaptation to an actual data load in a cell as a function of time;

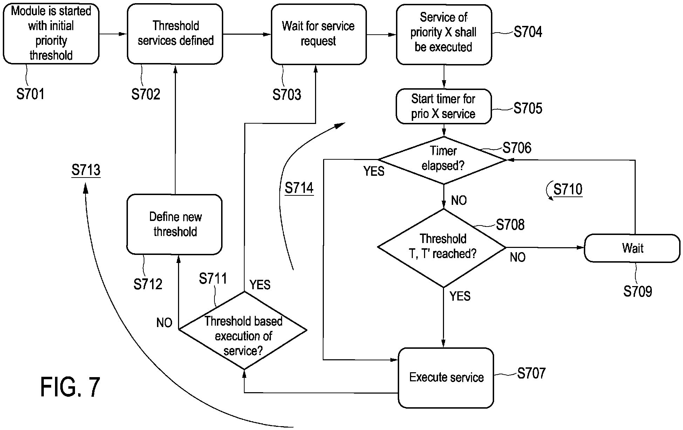

- Fig. 7: is a flow chart of the service execution process including a threshold check, timer based execution and threshold update - the scheme particular applies for prioritized services for schedules execution; due to a non-reached initial first threshold a timer runs and elapses - as a consequence a new threshold is defined and stored for further application upon execution of a service.

Fig. 1 is a schematic block diagram of a radio device 100 in accordance with an embodiment of the present invention. The radio device comprises a communication unit comprising transmission unit 102 and a receiver unit 104 for exchanging radio signals 140 with a radio access network infrastructure 200 in accordance with a known radio telecommunication standard. By way of example, the transmission and receiver units 102 and 104 may operate in accordance with a GSM, UMTS, and/or LTE standard, without excluding compatibility with any other standard of radio telecommunication used anywhere in the world. The transmission and receiver units 102 and 104 may for instance be implemented in the form of a radio module, that is, a hardware unit that implements all baseband and RF functionalities required for communicating with a radio access network 200.

The radio device 100 further comprises an application scheduling unit 106. The application scheduling unit 106 may be integrated into a radio module comprising the transmission and receiver units 102 and 104. In another embodiment the application scheduling unit 106 is provided on a separate piece of hardware, which comprises an application unit 108. The application scheduling unit 106 may be any type of signal or data processing device that generates application exchange data which are to be transmitted by way of the radio signals 140 to an external application server in the network 200 via the transmission unit 102.

The radio device 100 further comprises a device memory 110 that is connected via a first download line 131 with the receiver unit 104 and via bidirectional line 133 with the application scheduling unit 106. Further connections, like a first upload line 132 to the transmission unit 102, are of course possible in accordance with the technical requirements of the radio device. However, they are not shown in detail for reasons of simplicity of the block diagram and of the present description.

As depicted in Fig. 1, the radio device 100 has a transmission unit 102 connected via a second upload line 103 and an upload measurement unit ULM to the application scheduling unit 106. Further, the radio device 100 has a receiver unit 104 connected via a second download line 105 and a download measurement unit DLM to the scheduling unit 106. Thus, the radio device 100 of the instant embodiment optionally has means for measuring an upload data volume. The knowledge about an upload data volume indeed is of limited significance for the purpose of determining a cell load. However, an upload volume can be used to estimate and/or determine a priority whether and when an upload can be adequate even though a cell load is high.

In the instant embodiment, the radio device 100 has a particular preferred way of evaluating a download data traffic, i. e. a data volume received from receiver unit 104 via download line 105 and download measurement unit DLM. In principle, such evaluation of download traffic is possible to be executed for any kind of radio device by means of the exemplifying scheduling unit 106, i. e. the presently exemplified embodiment for an UMTS radio device application will also hold in principle for a GSM based radio device application or an LTE radio device application.

The embodiment starts from the consideration that a GSM or UMTS or LTE system basically is a duplex system with separated download lines 105, 131 and upload lines 103, 132. However, nevertheless the concept of the embodiment recognizes that via evaluation of a download traffic it will be possible to make a statement about an upload traffic in sufficient quality. This is because it can be assumed that a download traffic and an upload traffic will be statistically symmetrical and therefore they can be assumed to have the same mean value. This thesis is based on the experience that each traffic load in an upload line 103 will more or less naturally cause at least a signalling item or the like download traffic in the download line 105. This consideration also takes into account that not necessarily an exact statement is requested for the need of access evaluation. In a simple approach in terms of a more or less boolean statement it will be sufficient to e.g. roughly distinguish between a situation wherein congestion is very likely to occur and a situation where a relaxed traffic load can be assumed.

Basically the concept of the instant embodiment can be summarized in that a radio device is supplemented via an application scheduling unit 106 adapted to provide an application transmission schedule 120 which depicts a favourable point of time for affording a transmission of data and the point of time or time span can actively be selected by an application unit 108 or the application device 100. In particular, in an M2M device or in an apparatus connected to the M2M device an application is implemented with a logic function which gathers information from the end-to-end radio device by means of measurement of a cell load; namely due to measuring a physical parameter of a traffic in a download channel. Thus, triggering or periodical cycle can be implemented for data transmission supported by the gathered information and a favourable point of time can be selected for building up of a upload transmission or other transmission to the cell without endangering a congestion situation. In particular, also non favourable time spans or point of times can be disregarded as forbidden time spans for data transmission.

The application scheduling unit 106 may have one or more application transmission schedules 120 and parameters stored; the application transmission schedule 120 shown is merely exemplary and may differ from other embodiments used for implementation in the field. The application transmission schedule 120 may be stored in different ways. In one example, the application transmission schedule 120 is organized as a list 121 of allowed times. The allowed times of the list 121 may define a calendar week, a calendar day or at least one time of day, depending on the requirements of the specific application implemented. Some applications may require a transmission of application exchange data at a rather low rate in terms of weeks only, while others may require much more frequent transmissions of application exchange data, for instance on an hourly basis.

A basic schedule of allowed times of a list 121 is exemplified in Fig. 3A - Fig. 3C

Examples of application transmission schedules 120 with a list 121 and further developments based on a dynamic adaptation functions --which are depicted as T1, T2, TMAX, UPDATE, and JITTER in Fig. 1-- of the list 121 of allowed times will be given further below with regard to Fig. 6A - Fig. 6C.

A first general operation of the radio device 100 will be explained in the following with reference to Fig. 2. The method starts with a step S200. In a subsequent step S202, the application unit 108 generates application exchange data. The application exchange data may be stored in the device memory 110 for retrieving them later. In a step S204, the application scheduling unit 106 performs a scheduling operation that determines a time for transmission of the generated application exchange data via the transmission unit 102. The scheduling is performed using the predetermined application transmission schedule 120 stored in the device memory 110. In a subsequent step S206, a transmission of the application exchange data generated by the application unit 108 is initiated by the application scheduling unit 106 and the transmission unit 102 transmits the application exchange data via the associated radio access network. In the described process flow, the scheduling and the initiation of the transmission of the application exchange data is performed by the application scheduling unit. The step S202 of generating application exchange data is performed by the application unit 108 and is thus not a mandatory step for the operation of a radio device in accordance with the present invention. For a radio device in accordance with the present invention, it is sufficient in some embodiments to simply perform the scheduling and the initiation of the transmission and, of course, the actual transmission of the application exchange data.

After the transmission has been performed, the radio device may either be shut down to stop the process flow in step S210, or return to the generation of application exchange data in step S202. It is noted that the generation of application exchange data may be performed independently and in parallel to the scheduling and transmission operations.

Fig. 3A - Fig. 3C show examples of application transmission schedules 120, each with a varied list 121, in accordance with different embodiments. The specific schedule 300, 310 and 316 shown in Fig. 3A - Fig. 3C respectively are visualized as diagrams of a list 121 of times showing allowed and forbidden times on a linear time scale extending over one day. Fig. 3C shows a section of the specific schedule 310 of Fig. 3B at an enlarged timescale as specific schedule 320. Throughout Fig. 3A - Fig. 3C forbidden times are indicated by hatching.

Fig. 3A is an example of an application transmission schedule 120 that restricts the allowed times in the list 121 to a consecutive span of time at hours between 0 and 6 o'clock, and at hours between 18 to 24 o'clock. An application transmission schedule 120 of this type or specific schedule 300 may be refined by additional parameters that further individualize the application transmission schedule 120; possibly down to the level of an individual radio device. A specific schedule 300 of the type of Fig. 3A is typically assigned to a group of radio devices. It may be defined by a scheduling parameter that encodes the allowed time spans in terms of their starting and end points in time.

A more refined application transmission schedule 120 is shown in Fig. 3B as a specific schedule 310. This specific schedule 310 of Fig. 3B in the list 121 distinguishes between numerous allowed time spans 312 and forbidden time spans throughout the days of a full week. Radio devices operating on the basis of the specific schedule 310 may transmit their application exchange data to the application server only during the allowed time spans 312. Certain times of the week are locked by defining forbidden time spans, for instance in order to allow the application server to perform tasks different from receiving and processing the application exchange data.

Fig. 3C shows an allowed time on an enlarged time scale of a specific schedule 320 for visualizing a possibility to further distribute the transmission times based on parameters allocated to the individual radio devices. The allowed time 316 has a number of dashed marks 316.1 to 316.n which represent transmission times that are determined for different individual devices on the basis of their respective application transmission schedule 120. The specific schedule 320 of this example distinguishes the transmission times on the basis of the individual radio device, thus prescribing an access to the radio access network for a transmission attempt at respective individual times. The specific schedule 320 may be defined in a way that allows several attempts per individual radio device during a single allowed time 316. For the present example, the scheduled time for the transmission of application exchange data by the radio device 100 of Fig. 1 is indicated by a full vertical line 316.2 on the timescale of the specific schedule 320 of Fig. 3C. An individual transmission time of this kind may be determined on the basis of a parameter that is unique for each radio device. A suitable parameter of this kind is the IMEI of the radio device.

Generally any application transmission schedule 120 of this or other kind can be stored as a calculation rule in the device memory 110 of the radio device 100 and used for determining the times of transmission by calculation, which can be performed by the application scheduling unit 106. In this embodiment the device memory 110 is implemented in the subscriber identity module 111 (SIM). A specific decision logic can be provided in the application scheduling unit 106 or the SIM card and a control for instance can be provided on basis of the SIM information. Thus, an update of application modules or other devices is easily affordable just by exchanging a SIM card without the necessity to amend a firmware. Thus, update of an application is easily possible.

By a calculation rule of this type, the radio load of the cell, to which the radio device 100 is attached, is distributed in time. This way, peaks of cell usage by M2M communication can be avoided and the capacity of the cell of the radio access network is more evenly used, allowing to serve a larger number of radio devices at a given point in time. Fig. 4 visualizes this effect by two schematic drawings showing the usage of a transmission capacity of a cell of a radio access network as a function of time over a full day. In particular Fig. 4 shows in general the effect of relaxing a congestion situation.

In Fig. 4A a quasi-periodical cycle of congestion situations with bunching correlation peaks 401 is shown which apply to a situation in the state of the art. In detail Fig. 4A shows a case of cell usage based on prior-art techniques. In this example, a peak 401 of the used capacity occurs at every full hour due to a large group of radio devices performing scheduled transmissions of application exchange data in accordance with a fixed prescribed application transmission schedule 120 according to the prior art. This kind of peaks 401 therefore arise on top of a mean base load 403 indicated by a line in Fig. 4A and thus may disadvantageously lead to a congestion situation. Fig. 4B in contradistinction depicts the basic effect of relaxing a congestion situation --be that it may be by transmission in dependence on a traffic condition due to a first aspect or by randomization due to a second aspect or by priorisation and development of conditions according to a third aspect of the concept of the invention-- as outlined in the general part of the instant application. In contrast, the distribution 402 of the usage of the cell capacity is more evenly in the example of Fig. 4B; although slightly above the aforementioned mean base load 403. However, the peaks 401 are smoothed out based on a shift of transmission times from busy hours to less busy hours during the night times and more evenly distributed by an individual assignment of the application transmission schedule 120 based on a device parameter that is unique for each radio device.

Fig. 5 shows schematically a UMTS code staple 501, 502 wherein on the left hand side in view (A) an empty cell --this means UMTS code staple 501 reveals a cell without data load-- is shown and on the right hand side in view (B) a busy cell is shown-- this means UMTS code staple 502 reveals a cell with data load--. It will be clear from the other description that the data load in a cell in particular is indicative of the danger of congestion and thus can be used for deciding about a traffic condition, in particular a traffic threshold which can be used for forming a decision border for whether a transmission of a user equipment --resp. radio device resp. application device-- to the cell is initiated or whether a transmission is not initiated. Thus, a radio device 100 for an application device according to the instant embodiment is adapted to execute an autonomous access control based on an access evaluation; this with the purpose to avoid data overload in a cell and remedy the danger of congestion. One or more measurement units ULM, DLM of the radio device 100 can be used for a measurement which is affordable within existing logic and existing radio device systems to evaluate an access for the radio device 100 by means of the scheduling unit 106.

The essential assumption for this concept is that on the download side each node B power can be judged basically on basis of the code staple system shown in Fig. 5; i.e. the download traffic is of interest for estimating the data load and other load of a cell. One essential feature of an UMTS FDD code staple system is that the basic load is caused by the CPICH control channel independent of whether a further data load is present in the cell. Also, the fraction of a CPICH power 510 and power 520 of common channels compared to the total power 540, 540' of a user equipment's receiver unit 104 is independent of any interference. Measurement of a CPICH_Ec/lo value is basically known in a 3GPP standard like for instance from S25.214 and can be used for handover purposes or other purposes of mobility. Thus, in principle a measurement of a download power parameter like the a CPICH_Ec/lo value is in principle possible within the standard and significant for the download traffic; thus it is a suitable indicator for a load of a cell. In the instant concept of the embodiment a CPICH_Ec/lo parameter is used to provide an evaluation of access and access control as a function of time for a radio device 100.

Namely, as shown in view (B) of Fig. 5 the UMTS FDD code staple is largely increased in addition to the staple power 510, 520 caused by the CPICH channel and common channels, namely due to the power 530 of additional user channels UseCH1 and UseCH2 - in Fig. 5B UseCH1 and UseCH2 is a variable interfering part of the total power spectrum 540, 540'. Thus, the free download capacity 500, 500' of a radio device in a certain cell as depicted in Fig. 5B of a busy cell is largely reduced as compared to an empty cell in Fig. 5A. Consequently, the measurement of a power parameter by means of a download measurement unit DLM at the receiver unit 104 can be used to evaluate a M2M access for a radio device 100 shown in Fig. 1. The instant exemplifying description based on a CPICH_Ec/lo power parameter of course can be transferred to any other power parameter known in the UMTS or GSM or LTE system, which is possible to indicate a power spectral density at a receiver unit 104. For instance, an RSSI value of a total received wide band power also can be used in a GSM based system. Also, the load on specific signalling channel can be used as a measure for a load, in particular data load, in a cell. In particular also channels which are responsible for a distribution of resources can be used as a measure for a traffic load within a system.

As will be clear from Fig. 5A in comparison to Fig. 5B a power threshold can be defined somewhere between the top level of total power spectrum 540 of an empty cell (Fig. 5A) and a top level of total power spectrum 540' of a busy cell (Fig. 5B). The power threshold can be used to define a border whether a transmission can be initiated or not. It should be noted that such concept for access evaluation and access control can be used for an improved and flexible and easy distribution of data load to a radio devices own discretion for any time in terms of a week, a day or a time of day. As advantageously described in the instant embodiment such autonomous scheduling and access evaluation of the radio device 100 is within the list 121 of transmission schedules 120 as described above; namely as will be clear from the description of Fig. 6A to Fig. 6C an autonomous handling of access evaluation and control of the radio device can specifically be restricted to allowed time spans 302, 306, in particular further also can be restricted to allowed time spans 312, 316 of Fig. 3B and Fig. 3C. Nevertheless, the instantly described embodiment can be realized independently of a time list in an application transmission schedule 120 or another specific list 121, namely by giving the radio device an own accountability for load dependent access evaluation on its own discretion. However, it is a preferred embodiment to combine the concept of an allowed time list 121 with the instantly described load dependent access evaluation of a radio device on its own discretion.

Fig. 6 is meant to introduce and make the specific advantages achieved understandable by means of the further developments based on a dynamic adaptation function which are depicted as T1, T2, TMax UPDATE and JITTER in Fig.1. Dynamic adaptation functionality T1 and T2 stand for load dependent access evaluation based on one threshold TR1 or two thresholds TR1, TR2 respectively. Dynamic adaptation functionality TMax stands for a maximum time span in which a configured transmission criteria was not fulfilled; thus, to prevent a data loss, after maximum time span data transmission can be affected anyway. Dynamic adaptation functionality UPDATE stands for the possibility to update a threshold value TR to a new threshold value TR' in the case the old threshold is inadequate in use. Dynamic adaptation functionality JITTER stands for randomization an actual time point of transmission around a predetermined time point; thus simulating a natural statistic of random transmission also for an M2M application (which in another case is self-evident when a person is using a radio module). Thereby a jitter range 610 of time can defined around a balance point 611 of time for initiating the transmission of the application data at random as shown in Fig. 6A and Fig. 6B.

Examples of an independent dynamic adaptation function application --which are depicted as icons T1, T2, TMAX, UPDATE, and JITTER in Fig. 1 and in Fig. 6A, Fig. 6B and Fig. 6C where appropriate-- for a transmission schedule 120 or a transmission schedule 120 with a list 121 and further development of the list 121 of allowed times based on a dynamic adaptation function, will now be described in view of the examples given in Fig. 6A, Fig. 6B and Fig. 6C.

For this purpose, Fig. 6A depicts a measured download traffic 601 in a download line 105 as measured in the download measurement unit DLM as a function of time over a day. The more load is in a cell the larger is the value of the CPICH_Ec/lo power parameter of the measured download traffic 601 as a function of time. Thus, the higher the fraction of user channel signal 530 interfering in a code staple power is --in comparison to the basis of a CPICH_Ec/lo power 510 and/or common power 520 of the serving cell-- the more the danger of congestion is due to high load in the serving cell. In Fig. 6A a first load threshold TR1 is applied to form a decision border whether transmission is initiated ("green light traffic light" below load threshold TR1) or whether transmission is not initiated ("red light traffic light" above load threshold TR1). The load threshold TR1 can be defined in dependence of the actual basis load as will be clear from the further description of Fig. 6B and Fig. 6C. In particular, the load threshold TR1 is a basis for the T1 load threshold function depicted in Fig. 1 as a part of the application transmission schedule 120.

In the case the CPICH_Ec/lo power parameter exceeds the load threshold TR1 --namely between clock time 6:30am to 19:45pm-- no transmission is initiated. However, in the time between 19:45pm and 6:30am the Ec/lo power parameter is below the TR1 load threshold. Thus, the delayed transmissions and actual transmissions within the latter time span can be executed without causing the congestion problem. Of course, the T1 function can be restricted to application data of only limited importance thus low priority. The load threshold value TR1 of the T1 function in the transmission schedule 120 can be provided by the application and can be stored in device memory 110 which in this embodiment is part of a SIM 111. In its simple embodiment the radio device 100 by means of the download measurement unit DLM is adapted to measure a download traffic load over a day and fixes the TR1 load threshold for instance by means of an certain XdB value which is above a minimum measured value; namely in the mean the basic power 540 as depicted in Fig. 5A plus XdB minimum user channel power.

In a further preferred embodiment the download measurement unit DLM is adapted to indicate an empty cell for instance by indicating a minimum data load as shown in Fig. 5A. In this case a signalling trigger can be given to the system such that ideally the transmission or reception of big data packets is possible as the surrounding conditions are rather advantageous. An empty cell condition is particular advantageous upon reception or sending of large data packets. In this specific case it is not the network data access which is critical but the amount of data to be received via the receiver unit 104. This can be considered as a concept for controlling a best point of time for a FOTA update. In this case, a application server can be signalized that a large amount of data provided for the application can be downloaded or uploaded. Thus, a large amount of data can be transmitted non-critical in time in a cell, which is practically empty. Thus, the evaluation of ideal access to the network is not only used to define a time span for transmission but also used to possibly find an ideal point of time for requesting performance of the net. Performance herein generally is considered to be any kind of service request.

The instant example of a T1 functionality of Fig. 6A --in combination with Fig.1 via the receiver unit 104, the download 105, the download measurement DLM and the transmission schedule 120 supplemented by the T1 functionality in the application scheduling unit 106-- is particular advantageous for immobile applications as these usually will have roughly the same surrounding and time dependent evolution of cell load over a day and day by day as depicted in Fig. 6A. Thus, basically the variance of a load threshold value TR1, the steadiness thereof and the selection criteria for initiating a transmission or not will stay to be rather static.

However, this may not be the case for a partially mobile application based on at least partially mobile radio devices as the surroundings in a cell are changing with moving location of the radio device 100. Even at least partially mobile applications can be handled within the instant concept of embodiment which however will be even better achieved as exemplified within Fig. 6C described below.

Here, as a first example, for instance a traveller may be in the situation to receive actual newspaper information in the morning at 7 o'clock on a handheld or tablet PC. Such information is available usually at 22:00pm of editorial office closing time and thus in principle is available as a download between 22:00pm until 7:00am. However, due to a unknown local area and cell, an ideal point of time cannot be determined exactly in advance for download. Nevertheless, for each system of mobile communication a typical indication can be provided to distinguish between a very busy cell and a rather empty cell. Thus, the access evaluation and access control for the download can be regulated within the above mentioned scheme of a T1 functionality. For instance the TR1 load threshold, of course, may be statistically re-defined via AT or on basis of other knowledge which can be provided in a SIM card 111 for instance. In a very simple case, for each cell in a radio network a specific fixed localized cell has a specific load threshold.

Thus, in summary for specific radio devices and at least non critical data load a measurement of a download traffic can be used to provide a T1 functionality as described above, i. e. the load threshold TR1 to discriminate between a favourable and a non-favourable point of time or time span for data transmission in an M2M application. The load threshold can be defined respective to a physical quantity which is measurable for a cell; here a CPICH-Ec/lo parameter.

Basically, such functionality can also be provided in the net, which however is not so advantageous as a functionality in a radio device. A T1 functionality in the radio device is more reliable and more specific to the actual localization of the radio device. Also, a network based solution would possibly provide a hysteresis mechanism for numerous M2M applications at the same time which is inferior to the possibilities achievable with an individual solution. Thus an individual solution of a radio device as described above will participate from natural relaxation due to hysteresis and differences between a receiver unit, subscribers point of time and localization as well measurement time for a specific radio device in a cell.

As a second example, Fig. 6A and Fig. 6B show calm hours wherein the depicted a CPICH_Ec/lo received power is only half of the total received power. The other half of power load is due to interference and common channels or other user channels. In the time span in which the CPICH_Ec/lo value is drastically lowered the reason for this is that apart from the a CPICH_Ec/lo power also further power is measured. For an individual M2M device such disturbing power will be received from traffic in neighbouring cells or the nearest surroundings. By implementing a simple "traffic light" system favourable times for transmission of data can be identified and peak power load can be identified to certain times.

The power load depicted as a function of time of Fig. 6A and Fig. 6B is only an example for a specific cell. The development will be different in another cell. Thus, the evolution of power will be individual for each cell. The position of a user equipment will only shift, however, an individual curve for each cell in parallel to another point. Assuming that no traffic is existing due to the total power of all other channels the CPICH_Ec/lo of the user equipment in the middle of a cell will have values of -3 db and of user equipment at the border of a cell will have a value of -4,8 db due to interference with neighbouring cells of similar size. This means that for the main value for determining borders for transmission the position of the user equipment is far less relevant; in other words: the value for determining borders for transmission is independent of the position of the radio device. However, significant is the load of the cell which can be different, however for each individual cell. A cell, however which has a small CPICH will not be able to receive large amounts of further traffic in the upload direction.

As will be clear from the more elaborated "traffic light" system of Fig. 6B the momentarily situation of a measured value 602 can be interpreted in different ways. For instance priorities of messages to be send as well as scale and number for the messages of information can be defined for providing a priority of data transmission. Fig. 6B shows a first load threshold TR1 and a second load threshold TR2 within a T2 functionality. For instance, this T2 load threshold functionality is affordable for handling data of higher priority class; thus said data can be sent also above load threshold TR1 but below load threshold TR2. Thus, in the case of deferring important data the point of time for sending such data will also be possible until 8:00am in the morning and already beginning from 18:00pm in the evening as exemplified in Fig. 6B.

Also in Fig. 6A and Fig. 6B the JITTER functionality of Fig.1 is shown and will be explained hereinafter. M2M devices will be controlled by the connected application and hence very likely the situation occurs that during same time same access (RACH) or PDP context establishment are tried, especially at certain times staggered with a certain periodicity, as shown in Fig. 4A. Based on the assumption that for a transmission of certain data the M2M device has a certain time window available in which these data are to be transmitted. Means in case of a detected RACH collision or Access_Reject the M2M device applies a jitter (module individual offset) based on a random choice within a certain window and retries again its transmission attempt. Applying a jitter means random delay value ensures that devices having made parallel attempts start to decorrelate and spread across the available time. Furthermore the window size or maximum jitter in time may also be a function of the number of failed access attempts tried so far. Hence this allows a radio device having had multiple failed attempts so far retry the establishment within shorter period where a certain minimum time is not undergone. As a consequence there should not be the risk of correlation peaks and the access attempts should be equally spread.

In a more advanced schematic besides the behaviour in case of failed attempts also the future behaviour in case of "Pass" and "Fail" attempts may influence the access behaviour. In the M2M devices or in the connected application a statistic is maintained collecting the information related to "Passed" and "Fail" attempts. Based on that statistic the M2M device decides which would be a good access time; which usually means in the next access the same time as during previous access could be used. However, in case of "Fail" next best occasion is used and if that fails or already after first failing attempt the module returns to the previously described jitter method. Above mentioned methods are based on randomization and/or jittering the access to avoid peaks and collecting knowledge based on attempts made with trial and error to smoothen the access distribution. Acknowledging the fact that many M2M devices do not have a need for instantaneous transmission but rather communication set-up within a certain time period a method for randomization and distribution is applied to the access including a statistical component.

Further it turns out that coupling an execution of a task to a certain boundary may be suitable for 95% or even 97% of the cases, however, in other rare scenario on depending on the circumstances such boundary may never be reached. Hence to prevent from blocking the activity a circumvention mechanism is installed. The task will be executed after a timer has elapsed, during task execution information will be exchanged indicating a timer expiry driven execution so that the threshold values for the task can be adapted. Hosting of the thresholds in the SIM and also localization of the algorithm there seems to be most promising. Fig. 6C schematically shows the concept of an update functionality depicted in the application transmission schedule 120 of Fig.1 because an initially given load threshold, for instance load threshold TR has not been achieved by the measured values 603 thus the data transmission will not be able to reach "green traffic light" phase and thus data transmission is affected upon a timeout value of a timer task which has been given a priority.

In an even more improved embodiment with one or a predetermined amount of timeouts of the timer execution of a data transmission from a radio device 100 to an application server will be an indication for defining a new load threshold TR' which lies above the old load threshold. Thus, for future data load or traffic load the "green traffic light" phase can be achieved and thus a later data transmission is possible, which is not necessarily triggered by a timeout of a timer. Generally a timer can be provided for measuring a predetermined time span after a trigger event and wherein the transmission scheduling unit is configured to trigger the timer in the event of detecting a first failed attempt of scheduling transmission of application data. Generally therefore the application unit is configured to ascertain a number of failed attempts of initiating a scheduled transmission and the transmission scheduling unit comprises a threshold adaptation unit, wherein the threshold adaptation unit is configured to adapt a traffic condition threshold in response to a measured number of failed attempts of initiating a scheduled transmission.

In the case, an application is not executed as the condition of the load threshold is not achieved, a timer t starts to run. A timer t can be coupled to a certain class of priority. However, when the execution of a data transmission is affected due to a timeout value of the timer t and not due to achieving the traffic load condition for a certain priority class, then an update mechanism can be effected in the case the scenario of a run out timer and not achieving the condition of a priority class occurs once or for a number of times. Thus, the update mechanism can be bound to a certain consolidation of a repeated same situation. While the communication with an application center is indicated that an action timer and not a trigger has been effected, the service center can prescribe new load threshold values TR'. These new load threshold values TR' can be transmitted by the service center directly to the SIM and can be stored in an update functionality of the application transmission schedule 120. In principle, priority load thresholds and priority control can be accomplished over the SIM card. In particular the threshold adaptation unit adapts a first threshold assigned to a first priority and a second threshold assigned to a second priority such that an order, distance, ratio or the like relation of first and second threshold before adaptation remains. E.g. criteria hold which adapt a first and second threshold such that a "yellow light traffic light" phase still has sufficient space upon raising a lower threshold --by also raising an upper threshold-- or a "yellow light traffic light" phase has a sufficiently limited upper extent upon lowering a lower threshold --by also lowering an upper threshold--. Also a lower threshold can be adapted upon amending of an upper threshold in relation to the lower threshold. The detailed method will be further described with regard to Fig. 7 which shows a flow chart of a service execution process including load threshold check and timer based execution and load threshold update. Described in view of Fig. 6C in a first step S701 a module is started with initial priority load thresholds. In step S702 the load thresholds for certain services can be defined. Once in step S703 the system waits for service requests for instance in step S704 the service for a certain priority class X can be executed. At the same condition in step S705 the timer for the priority X service class can be started. This situation is depicted in Fig. 6C respectively with step S702 for a load threshold TR and step S705 for timer t. In step S706 it is checked whether the timer has elapsed. In the "yes" path the service is executed in step S707. However, as long as timer has not elapsed in the "no" path in step S708, it is checked whether the load threshold TR has been reached. In the "no" path a wait step S709 is repeatedly executed while the loop of steps S706, S708 and S709 is repeated. Thus, the loop S710 more or less depicts the situation of the record in Fig. 6C between approximately daytime 7:00am to 24:00pm. As the loop S710 0 is exit only by the "yes" path of S706 then --as a follow up step S711-- it is checked whether the execution has been load threshold based or not. In the instant case the "no" path is to be followed and a new load threshold is to be defined in step S712 which is depicted at 24:00am in Fig. 6C. The update functionality thus allows to provide the outer loop S713 which connects to the definition of a new load threshold in step S702 and a further wait for service of step S703. With a consecutive follow up of steps S704, S705, S706. At approximately 12:00am of the next day in step S708 indeed the load threshold TR' which is above the old load threshold TR is reached and thus the "yes" path is to be followed to step S707. The same holds for approximately 1:00am at that day. Thus, follow up of step S707 again the check whether a load threshold based execution of service has evolved has to be answered by following the "yes" path and step S703 with a further wait for service request. Thus the second bracket in Fig. 6C more or less depicts the inner loop S714 in Fig. 7.

In addition services or tasks related to receive or transmit activities which have different priorities related to their execution or the execution are bound to certain thresholds which may be fulfilled in special times. One further approach is not to load the network with additional communication to execute on proper conditions. However, as there may be scenarios where the pre-defined conditions may never be fulfilled and not relaxing the defined boundaries so far that their definition works in all scenarios under all circumstances it is advantageous that that for a task of a certain priority a maximum delay time is specified; in particular in further developing the above described procedure. This means a task coupled to a certain threshold in a receive level trying to indicate an empty cell may be executed after a certain time has elapsed. This time can depend on the priority of the task. Furthermore a mechanism exists for updating such values.

The saving of thresholds for execution of certain tasks is beneficially done on the SIM card in a special field. The service provider can negotiate with the network provider that for certain tasks as updates which cause heavy load in the net he will only use the low traffic hours of a cell by setting and/or agreeing on a certain boundary for the execution. As in the field there are certain areas where this condition is not reached it will be executed after a certain time anyway.

Furthermore --when execution happens because of timer expiry-- this will be indicated by the radio device as described above. And hence there are two possibilities for proceeding depending on the desired logic.
A) After the service was done x-times because of timer t expiry the module may automatically switch the threshold to the lowest measured value and keep that as new threshold including hysteresis;.
B) or the module reports to the service centre which was contacted because of the task, that the task was conducted because of timer elapse and the service centre provides a new threshold based on information provided or by corresponding relaxation.

If the field is on the SIM card it has the special advantage that the information on that card can be pre-configured and automatically maintained by the service provider. In case the UE supports the distinguishing of more than priority calls where the execution is coupled to a threshold or specific values, these different priorities may have the same or different timer value for their execution.

In addition if one service is executed because of timer expiry this may also imply a threshold change for the other service priority classes. The priority class may be defined in terms of threshold for their execution by X-dB difference from one class to the next class. I.e. a priority X class task not executed within a certain time may be executed because of timer expiry. In case of the next task of that priority the threshold of the task being one step higher in priority X+1 may be used as new threshold which would be an automatic adaption of the execution threshold.

Besides nesting threshold on the SIM it may also host the execution logic or even be the application itself. The module itself may be used as storage for threshold values, in many scenarios for various purposes hence also the functionality could be nested but would need to be flexibly configurable hence makes it less attractive for tariffing issues. In addition the application would need to be informed that the execution may be done the latest when timer expiry is reached. Also the application may be used which causes the issue that the threshold would be need to be hosted there, being potential subject for manipulation and the application needs to get the information while the module has the information available. Hence, also many locations are possible for hosting of such information on the SIM and even having it SIM controlled is most attractive.

## Claims

1. A radio device, comprising:
- a communication unit, which is configured to communicate with an allocated access-cell node of an access cell of a cellular radio access network;
- a transmission scheduling unit, which is configured
- to initiate transmissions of application data between the radio device and the access-cell node in accordance with a predetermined application transmission schedule defining at least one allowed transmission time span, in terms of a week, a day or a time of day for the transmission of the application data,
- to select a point in time for initiating the transmission of the application data within the respective current allowed transmission time span in dependence on a traffic condition to be fulfilled.

2. The radio device of claim 1, with the transmission scheduling unit, which is configured
- to initiate transmissions of application data between the radio device and the access-cell node after a maximum time span in which the configured transmission criteria was not fulfilled.

3. The radio device of claim 1, further comprising a measurement unit, which is connected with the transmission scheduling unit and which is configured to ascertain, as a measure of the traffic condition in either upload or download direction, a current value of a quantity indicative of a current transmission traffic amount on a download channel, which is served by the access-cell node that is to receive the transmission of the application data and wherein a threshold value of the quantity indicative of a current transmission traffic amount is forming the decision border whether transmission is initiated.

4. The radio device of one of the preceding claims, wherein the transmission scheduling unit has read access and write access to a device memory that stores a threshold value and/or traffic condition data related to at least one prior allowed transmission time span.

5. The radio device according to one of the preceding claims, wherein the device memory is a device memory of the radio module and/or a subscriber identification module and/or of the application module.

6. The radio device according to one of the preceding claims wherein a stored threshold value depends on the amount and/or priority of the data to be transmitted from the radio device.

7. The radio device of one of the preceding claims, wherein a transmission scheduling unit is configured to ascertain, from the stored traffic condition data, a first traffic time span within a respective scheduled allowed transmission time span, the first traffic time span exhibiting a value of the measure of the upload traffic condition exceeding a predetermined threshold value, and to select the point in time for initiating the transmission of the application data from at least one second time span within the respective scheduled allowed transmission time span, the second time span having no overlap with the first time span.

8. The radio device of one of the preceding claims, wherein the transmission scheduling unit is configured to select the point in time for initiating the transmission of the application data from a peak center region of the allowed transmission time span in the case the threshold is currently not exceeded, and is configured to select the point in time for initiating the transmission of the application data from a peak off-center region of the time span in the case the threshold is currently exceeded.

9. The radio device of one of the preceding claims, wherein the measurement unit is configured to ascertain, as the quantity indicative of a current transmission traffic amount, a number of failed transmission attempts of the application data between the radio device and the access-cell node in association with the respective allowed time span, in terms of time of the day, in which the failed attempts were made.

10. The radio device of one of the preceding claims, wherein the transmission scheduling unit is configured to select an exact point in time for initiating the transmission of the application data at random within the respective allowed transmission time span scheduled for the transmission, if a predetermined threshold value for the respective allowed transmission time span is fulfilled, in particular wherein a jitter range of time is defined around a balance point of time for initiating the transmission of the application data at random.

11. The radio device of one of the preceding claims, wherein the transmission scheduling unit is configured to select an exact point in time for the initiating the transmission of the application data at random within the respective allowed transmission time span scheduled for the transmission, whereas the duration of the transmission time span depends on the amount of collisions detected during earlier attempts.

12. The radio device of claim 11, wherein the transmission scheduling unit is configured to select the exact point in time by either delaying or bringing forward the transmission within the respective allowed transmission time span in accordance with application of a jitter to a predetermined point in time.

13. The radio device of one of the preceding claims, wherein a respective priority is allocated to a respective transmission of application data, and wherein the point in time for initiating the transmission of the application data within an allowed transmission time span is determined in additional dependence from the allocated priority in that a smaller maximum delay is preset for a transmission of higher priority and a larger maximum delay is preset for a transmission of lower priority.

14. The radio device of one of the preceding claims, further comprising an application unit, which comprises the transmission scheduling unit, and which transmission scheduling unit is configured to initiate an upload or download data communication between the radio device and an application server via the cellular radio access network.

15. The radio device of claim 14, wherein the communication unit is configured to forward scheduling information received from the application server to the transmission scheduling unit, and wherein the transmission scheduling unit is configured to initiate storage of the received scheduling information in a device memory, in particular wherein the device memory is a device memory of the radio module and/or a subscriber identification module and/or of the application module.

16. The radio device of one of the preceding claims, wherein the application unit is configured to provide an updated scheduling information.

17. The radio device of claim 15 or 16, wherein the application unit is configured to ascertain a number of failed attempts of initiating a scheduled transmission and the transmission scheduling unit comprises a threshold adaptation unit, wherein the threshold adaptation unit is configured to adapt the respective transmission criteria, in particular a traffic condition threshold, in response to a measured number of failed attempts of initiating a scheduled transmission.

18. The radio device of claim 17 wherein the threshold adaptation unit adapts transmission criteria, in particular a first threshold, assigned to a first priority and/or wherein the threshold adaptation unit is configured to adapt transmission criteria, in particular a second threshold, assigned to a second priority, in particular such that an order, distance ratio or the like relation of first and second threshold before adaptation remains in a given range.

19. An application server, comprising:
- a server application-scheduling unit, which is configured
- to ascertain an application transmission schedule for at least one allocated radio devices, the application transmission schedule respectively defining at least one allowed transmission time span, in terms of time of the day, for the transmission of the application data between the respective radio device and the application server in upload or download, and
- to initiate a transmission of the application transmission schedule to the respective radio device.

20. Method for operating a radio device, in particular a radio device of an application device and/or an application server as claimed in one of the preceding claims, comprising the steps of:
- providing a traffic condition to be fulfilled
- providing a predetermined application transmission schedule defining at least one allowed transmission time span, in terms of time for the transmission of the application data
- select a point in time for initiating the transmission of the application data within the respective current allowed transmission time span in dependence on a traffic condition to be fulfilled
- initiate in accordance with the application transmission schedule transmission of application data between the radio device and the access-cell node.
